(19) Europäisches Patentamt
European Patent Office
Office européen des brevets

(11) **EP 3 021 302 A1**

(12) **DEMANDE DE BREVET EUROPEEN**

(43) Date de publication:
**18.05.2016 Bulletin 2016/20**

(51) Int Cl.:
***G08G 1/0962*** *(2006.01)*    ***G06K 9/00*** *(2006.01)*
***G07C 5/00*** *(2006.01)*

(21) Numéro de dépôt: **15194397.4**

(22) Date de dépôt: **12.11.2015**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité: **12.11.2014  FR 1402588**

(71) Demandeur: **Valeo Schalter und Sensoren GmbH 74321 Bietigheim-Bissingen (DE)**

(72) Inventeurs:
• **BRADAI, Benazouz**
  **94046 Créteil (FR)**
• **HEITZMANN, Thomas**
  **94046 Créteil (FR)**

(74) Mandataire: **Pothmann, Karsten**
  **Valeo Comfort and Driving Assistance Propriété Industrielle**
  **76 rue Auguste Perret**
  **ZI Europarc**
  **94046 Creteil Cedex (FR)**

(54) **DÉTERMINATION AUTOMATIQUE D'UNE LIMITATION DE VITESSE SUR UNE ROUTE**

(57)    L'invention concerne un procédé de détermination automatique d'une limitation de vitesse en vigueur sur une route empruntée dans lequel on détermine la limitation de vitesse en vigueur sur la route considérée, à partir d'un premier ensemble d'informations comprenant au moins une limitation de vitesse vraisemblable associée à un premier indice de confiance issus d'un premier système de navigation et d'un deuxième ensemble d'informations comprenant au moins une limitation de vitesse probable associée à un deuxième indice de confiance issus d'un deuxième système de traitement d'images identifiant des panneaux de limitation de vitesse disposés au voisinage de la route, en prenant en considération le premier indice de confiance et le deuxième indice de confiance.

Conformément à l'invention, le procédé comporte en outre une étape de détermination en temps réel de la distance parcourue par le véhicule automobile depuis l'identification d'un panneau de limitation de vitesse ayant permis l'établissement de ladite limitation de vitesse probable associée audit deuxième indice de confiance (IC2), et une étape de détection de changement de contexte de navigation à partir d'un attribut délivré par le premier système et portant sur une donnée de contexte routier, et tant qu'aucun changement de contexte de navigation n'est détecté, on applique une première loi de variation (C1) sur le premier indice de confiance (IC1) et une deuxième loi de variation (C2) sur le deuxième indice de confiance (IC2) en fonction de la distance parcourue par le véhicule automobile.

FI G.2

## Description

La présente invention a pour objet un procédé de détermination des limitations de vitesse sur une route empruntée par un véhicule automobile, et un système pour la mise en oeuvre de ce procédé. L'invention a essentiellement pour but de proposer une solution pour déterminer automatiquement, en toute circonstance, une information relative à une limitation de vitesse qui s'applique à une route empruntée, ou sur le point d'être empruntée, par un véhicule automobile. L'information ainsi déterminée est alors exploitable dans différentes applications équipant le véhicule considéré. Notamment, mais de façon non limitative, l'information relative à une limitation de vitesse est utilisée dans le cadre d'un système d'aide à la conduite en indiquant au conducteur de manière explicite quelle est la vitesse maximale autorisée, par exemple lorsque ce dernier est en dépassement de cette vitesse maximale.

Le domaine de l'invention est, d'une façon générale, celui de l'aide à la conduite, qui propose un ensemble de systèmes d'assistance pour le conducteur, essentiellement destinés à améliorer les conditions de sécurité de circulation. On a ainsi récemment développé, par exemple :

- des systèmes dits de vision de nuit pour aider le conducteur à détecter de manière anticipée des obstacles difficilement perceptibles dans des conditions de circulation nocturnes ;
- des systèmes de détection anticipée de virage, pour prévenir au plus tôt le conducteur de la présence prochaine d'un virage ;

Dans le cadre des systèmes d'aide à la conduite, on cherche également désormais à proposer au conducteur un système d'avertisseur des limitations de vitesse : un tel système doit permettre de détecter automatiquement une limitation de vitesse en vigueur sur une route empruntée, ou sur une route qui est sur le point d'être empruntée, par un véhicule. En effet, des actions concernant les vitesses excessives sont nécessaires pour réduire le nombre d'accidents et la gravité de leurs conséquences. De nombreux conducteurs ne respectent pas les vitesses réglementaires : 40% des conducteurs ne les respectent pas sur autoroutes, 60% sur les routes nationales et départementales et 25% dépassent la vitesse réglementaire en ville par plus de 10 km/h.

On connaît déjà, en particulier du document EP 2 017 807 B1 au nom de la Demanderesse, un système de détermination d'une limitation de vitesse recherchée en vigueur sur une route donnée, par combinaison des données fournies, d'une part, par un système de navigation et, d'autre part, par un système associant une caméra embarquée et des applications de traitement d'images.

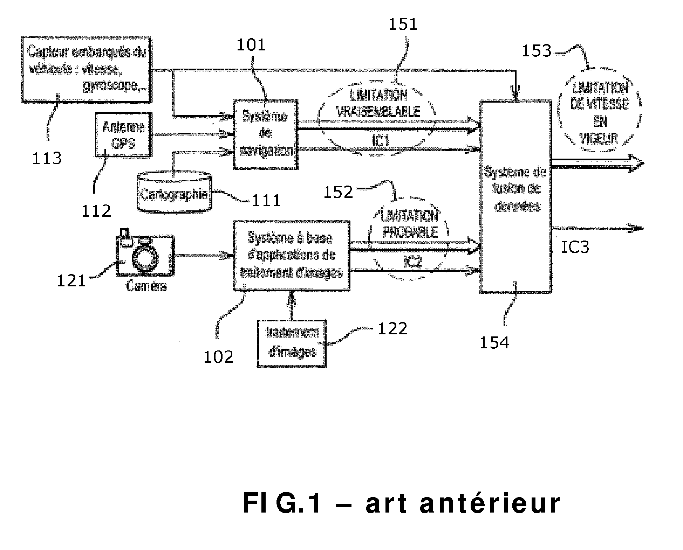

La figure 1 représente, de façon schématique, les différents éléments intervenant dans un exemple de réalisation d'un tel système au sein d'un véhicule automobile, permettant d'obtenir une limitation de vitesse 153 en vigueur sur une route empruntée, ou sur le point d'être empruntée, par un véhicule automobile. Le véhicule considéré embarque un premier système 101, dit système de navigation, permettant notamment une estimation de la vitesse autorisée à un endroit donné, et faisant notamment intervenir des données de cartographie 111 et une antenne GPS 112 placée sur le véhicule et apte à recevoir des informations de localisation précises. Dans l'exemple considéré, le premier système 101 fait également intervenir des capteurs embarqués 113 du véhicule considéré, du type capteur de vitesse, gyroscope.... Ces différents capteurs sont aptes à délivrer différentes informations permettant notamment de vérifier la cohérence entre le parcours effectivement suivi par le véhicule, et le parcours prévu par le système de navigation.

Le système de navigation 101 permet d'obtenir un premier ensemble d'informations 151 sur la limitation de vitesse recherchée à un endroit considéré, notamment à proximité de la position instantanée du véhicule. Le premier ensemble d'informations 151 comporte au moins une limitation de vitesse vraisemblable correspondant à la limitation de vitesse établie par le système de navigation 101, associée à un premier indice de confiance $IC1$. Différentes méthodes de calcul existent pour déterminer le premier indice de confiance, telles qu'un somme pondérée de plusieurs critères pouvant faire intervenir la précision du positionnement du véhicule par le système de navigation, le niveau d'information sur la route, la classe fonctionnelle de la route, le type de route (autoroute, route principale, route secondaire), l'environnement (ville, sortie d'autoroute...), le mode de guidage sélectionné ou non par le conducteur...

Le véhicule embarque par ailleurs un deuxième système 102, dit système de traitement d'images, qui est également apte à estimer la limitation de vitesse sur une route empruntée, ou sur le point d'être empruntée, par le véhicule. Le système 102 fait intervenir notamment une caméra 121 capturant des images de la route sur le point d'être empruntée par le véhicule, et un ensemble d'applications 122 de traitement d'images dont les algorithmes permettent notamment d'identifier des panneaux de limitation de vitesse disposés au voisinage de la route, c'est-à-dire visibles depuis le véhicule, et d'interpréter les chiffres représentés sur ces panneaux pour en déduire la vitesse en vigueur sur la route considérée. Les algorithmes utilisés peuvent par exemple faire intervenir des applications de reconnaissance de forme pour reconnaître les formes rondes des panneaux de limitation de vitesse, associés à une discrimination de couleurs permettant de ne retenir que les panneaux présentant un contour rouge, et des algorithmes de reconnaissance de caractère pour identifier les chiffres représentés, de manière individuelle ou dans leur ensemble.

Le système de traitement d'images 102 permet d'obtenir un deuxième ensemble d'informations 152 comportant au moins une limitation de vitesse probable à l'endroit considéré. Ici encore, la limitation de vitesse probable est associée à un deuxième indice de confiance IC2. Ici encore, un exemple de calcul du deuxième indice de confiance fera intervenir une somme pondérée de différents critères, tels que le facteur d'ombre sur l'image considérée, l'indice de symétrie de l'image considérée, l'indice de cohérence d'identification de panneaux de limitation de vitesse d'une image à l'autre...

Les ensembles d'informations 151 et 152 sont alors fusionnés dans un système de fusion de données 154 pour déterminer la limitation de vitesse recherchée 153. A cet effet, des moyens de traitement d'informations interviennent, avec notamment un microprocesseur et des applications logicielles spécifiques, implémentées dans le système de fusion de données 154. La limitation de vitesse recherchée correspond nécessairement à une limitation de vitesse réglementaire, c'est-à-dire une limitation de vitesse qu'il est possible de rencontrer sur les routes. Les limitations de vitesse réglementaires constituent donc un ensemble fermé, dit cadre de discernement D, qui représente également toutes les limitations de vitesse susceptibles d'être obtenues comme résultat en sortie d'un des deux systèmes. Ce cadre est défini, par exemple, comme suit :

D = {5,10,20,30,45,50,60,70,80,90,100,110,120, 130,999}. La valeur 999 représente le cas où il n'y a pas ou plus de limitation de vitesse.

Avantageusement, on extrapole les informations relatives aux limitations de vitesse fournies par chacun des deux systèmes pour envisager d'autres limitations de vitesse comme étant susceptibles d'être en vigueur sur la route considérée ; on associe alors chacune de ces autres limitations de vitesse à un coefficient de pondération, dit masse de croyance, intervenant dans la fusion de l'ensemble des informations alors disponibles relatives à la vitesse susceptible d'être effectivement en vigueur, fusion d'informations assurant la détermination finale de la limitation de vitesse recherchée.

D'une façon générale, la détermination des indices de confiance, et/ou des masses de croyance, et leur intervention dans la fusion des connaissances issues des deux systèmes dépendent de la stratégie de fusion retenue. Avantageusement, différentes méthodes extraites de la théorie dite des croyances peuvent être utilisées dans le système de fusion de données 154. Notamment, une des méthodes connues sous le nom de "combinaison conjonctive" de Dempster-Shafer, associée à une équation dite de Dempster-Shafer, donne des résultats particulièrement probants. D'autres méthodes, s'appuyant sur les théories bayésiennes, ou les théories ensembliste par logique floue peuvent également être utilisées dans le système de fusion de données 154.

Une fois la limitation de vitesse en vigueur établie, celle-ci peut par exemple être affichée sur un écran.

L'indice de confiance IC1, respectivement IC2, utilisé pour la fusion, est réactualisé à chaque fois qu'une nouvelle donnée est fournie par le système de navigation 101, respectivement le système de traitement d'image 102.

On obtient, avec le système décrit dans le document EP 2 017 807, une détermination de la limitation de vitesse en vigueur beaucoup plus fiable qu'avec les systèmes ne prenant en compte que des données issues d'un système de navigation, ou des données issues d'un système de traitement d'images. On évite notamment les risques de confusions dus à une information erronée ou une mauvaise interprétation de cette information. On peut également proposer une mode de fonctionnement dégradé, utile en cas de défaillance d'un des deux systèmes, basé sur l'autre système, non défaillant.

Néanmoins, dans la pratique, la Demanderesse s'est aperçu qu'un tel système de fusion ne permet pas de gérer de façon satisfaisante toutes les situations de conduite auxquelles un usager peut être confronté. En particulier, le système précédent ne fonctionne pas de façon optimale lorsque le véhicule traverse une zone de travaux. L'une des particularités d'une zone de travaux est qu'elle correspond à un événement ponctuel, entraînant une modification des limitations de vitesse en vigueur sur la portion de route considérée. Ces modifications ne sont alors pas connues du système de navigation 101, et une entrée dans une telle zone de travaux ne pourra être détectée que par le système de traitement d'images 102, par exemple par l'identification d'un panneau de limitation de vitesse indiquant une vitesse réduite, typiquement 30 km/heure. Dans la fusion, l'importance sera alors donnée à la limitation de vitesse probable fournie par le système 102 et associée à son indice de confiance IC2. Une autre particularité d'une zone de travaux est que la sortie de zone est rarement indiquée par un nouveau panneau sur la route. Il en résulte qu'avec le système précédent, l'indice de confiance IC2 préalablement déterminé au moment de la détection de l'entrée de zone reste inchangé, de sorte qu'on n'autorise pas le système à redonner plus d'importance au système de navigation 101, qui devient pourtant plus fiable.

La présente invention a pour but de pallier les limitations précédentes.

Plus précisément, la présente invention a pour objet un procédé de détermination automatique d'une limitation de vitesse en vigueur sur une route empruntée, ou sur le point d'être empruntée, par un véhicule automobile, comportant les différentes étapes suivantes :

- établir, au moyen d'un premier système, dit système de navigation faisant intervenir notamment un récepteur de données d'un système de positionnement géographique et des données de cartographie, une limitation de vitesse vraisemblable associée à un premier indice de confiance;
- constituer un premier ensemble d'informations comprenant au moins la limitation de vitesse vraisemblable, et le premier indice de confiance;
- établir, au moyen d'un deuxième système, dit système de traitement d'images, faisant intervenir notamment une caméra et des applications de traitement d'images aptes à identifier et interpréter des panneaux de limitation de vitesse disposés au voisinage de la route, une limitation de vitesse probable associée à un deuxième indice de confiance;

- constituer un deuxième ensemble d'informations comprenant au moins la limitation de vitesse probable, et le deuxième indice de confiance; et
- déterminer la limitation de vitesse en vigueur sur la route considérée, à partir du premier ensemble d'informations et du deuxième ensemble d'informations et en prenant en considération le premier indice de confiance et le deuxième indice de confiance;

le procédé étant caractérisé en ce qu'il comporte en outre une étape de détermination en temps réel de la distance parcourue par le véhicule automobile depuis l'identification d'un panneau de limitation de vitesse ayant permis l'établissement de ladite limitation de vitesse probable associée audit deuxième indice de confiance, et une étape de détection de changement de contexte de navigation à partir d'au moins un attribut délivré par le premier système et portant sur une donnée de contexte routier, et en ce que, tant qu'aucun changement de contexte de navigation n'est détecté, on applique une première loi de variation sur le premier indice de confiance et une deuxième loi de variation sur le deuxième indice de confiance en fonction de la distance parcourue par le véhicule automobile.

Outre les caractéristiques principales qui viennent d'être mentionnées dans le paragraphe précédent, le procédé selon l'invention peut présenter une ou plusieurs caractéristiques complémentaires parmi les suivantes :

- la première loi de variation consiste de préférence à maintenir le premier indice de confiance à une valeur initiale tant que le véhicule automobile n'a pas parcouru une première distance, puis à faire décroître linéairement, en fonction de la distance parcourue, la valeur du premier indice de confiance jusqu'à une valeur nulle alors que le véhicule automobile parcourt une première distance supplémentaire ;
- la deuxième loi de variation consiste de préférence à maintenir le deuxième indice de confiance à une valeur initiale tant que le véhicule automobile n'a pas parcouru une deuxième distance, puis à faire décroître linéairement, en fonction de la distance parcourue, la valeur du deuxième indice de confiance jusqu'à une valeur nulle alors que le véhicule automobile parcourt une deuxième distance supplémentaire ;
- la première distance, la deuxième distance, la première distance supplémentaire et la deuxième distance supplémentaire ont chacune une valeur fixée en fonction du contexte routier ;
- la valeur de la première distance est par exemple le tiers de la valeur de la deuxième distance ;
- la valeur de la première distance supplémentaire est par exemple égale à la valeur de la première distance ;
- la valeur de la deuxième distance supplémentaire est par exemple égale à la valeur de la deuxième distance ;
- sur détection d'un changement de contexte de navigation intervenant alors que le véhicule automobile a déjà parcouru, depuis l'identification du panneau de limitation de vitesse ayant permis l'établissement de ladite limitation de vitesse probable associée audit deuxième indice de confiance, une distance minimale prédéfinie inférieure à ladite deuxième distance, l'application de la deuxième loi de variation sur le deuxième indice de confiance est avantageusement interrompue, et la valeur du deuxième indice de confiance est remise à zéro ;
- sur détection d'un changement de contexte de navigation intervenant avant que le véhicule automobile ait parcouru ladite distance minimale prédéfinie, l'application de la deuxième loi de variation sur le deuxième indice de confiance est interrompue, mais on applique avantageusement dans ce cas une troisième loi de variation sur le deuxième indice de confiance en fonction de la distance parcourue par le véhicule automobile ;
- la troisième loi de variation consiste de préférence à maintenir le deuxième indice de confiance à une valeur intermédiaire inférieure à la valeur initiale du deuxième indice de confiance tant que le véhicule automobile n'a pas parcouru ladite deuxième distance, puis à faire décroître linéairement, en fonction de la distance parcourue, la valeur du deuxième indice de confiance jusqu'à une valeur nulle alors que le véhicule automobile parcourt la deuxième distance supplémentaire ;
- ladite valeur intermédiaire est déterminée de préférence en appliquant à la valeur initiale une décroissance dépendant de la distance parcourue selon une fonction sigmoïde ;
- ledit au moins attribut portant sur une donnée de contexte routier permet de distinguer les contextes routiers dans l'ensemble {ville, autoroute, hors ville, autre}.

La présente invention se rapporte également à un système de détermination automatique d'une limitation de vitesse en vigueur sur une route empruntée, ou sur le point d'être empruntée, par un véhicule automobile, comportant :

- un premier système, dit système de navigation, faisant intervenir notamment système de positionnement géographique et des données de cartographie pour établir une limitation de vitesse vraisemblable associée à un premier indice de confiance et pour constituer un premier ensemble d'informations comprenant au moins la limitation de vitesse vraisemblable et le premier indice de confiance;

- un deuxième système, dit système de traitement d'images, faisant intervenir notamment une caméra et des applications de traitement d'images, aptes à identifier et interpréter des panneaux de limitation de vitesse disposés au voisinage de la route, pour établir une limitation de vitesse probable associée à un deuxième indice de confiance et pour constituer un deuxième ensemble d'informations comprenant au moins la limitation de vitesse probable et le deuxième indice de confiance ;

- des moyens de traitement d'informations pour déterminer, à partir du premier ensemble d'informations et du deuxième ensemble d'informations, la limitation de vitesse en vigueur sur la route considérée,

caractérisé en ce que les moyens de traitement d'informations sont aptes à déterminer en temps réel la distance parcourue par le véhicule automobile depuis l'identification d'un panneau de limitation de vitesse ayant permis l'établissement de ladite limitation de vitesse probable associée audit deuxième indice de confiance, à détecter un changement de contexte de navigation à partir d'au moins un attribut délivré par le premier système et portant sur une donnée de contexte routier,

et, tant qu'aucun changement de contexte de navigation n'est détecté, à appliquer une première loi de variation sur le premier indice de confiance et une deuxième loi de variation sur le deuxième indice de confiance en fonction de la distance parcourue par le véhicule automobile.

L'invention sera mieux comprise à la lecture de la description qui suit, faite en référence aux figures annexées, dans lesquelles :

- la figure 1, déjà décrite, représente schématiquement un système de l'art antérieur pour la détermination automatique d'une limitation de vitesse en vigueur sur une route empruntée, ou sur le point d'être empruntée, par un véhicule automobile;

- la figure 2 illustre un exemple de lois de variation appliquées sur le deuxième indice de confiance, respectivement le premier indice de confiance, en fonction de la distance parcourue par le véhicule, conformément au principe de la présente invention ;

- la figure 3 illustre une situation particulière dans laquelle deux lois de variation sont appliquées successivement au deuxième indice de confiance, selon un mode de réalisation possible de l'invention.

Les différents éléments apparaissant sur plusieurs figures auront gardé, sauf précision contraire, la même référence.

L'architecture du système de détermination automatique d'une limitation de vitesse en vigueur sur une route empruntée, ou sur le point d'être empruntée, par un véhicule automobile conforme à l'invention reste globalement inchangée par rapport à ce qui a été décrit en référence à la figure 1, et ne sera donc pas à nouveau décrite.

L'amélioration concerne la partie de traitement d'information réalisée dans le système de fusion de données 154.

Comme indiqué précédemment, l'inconvénient du système décrit dans le document EP 2 017 807 réside dans le fait que l'indice de confiance IC2 associé à une limitation de vitesse probable déterminée à partir d'un panneau de limitation identifié par le système de traitement d'images 102 reste constant tant que le système de traitement d'image n'a pas identifié un nouveau panneau de limitation de vitesse. De même, l'indice de confiance IC1 associé à une limitation de vitesse vraisemblable déterminée par le système de navigation 101 reste constant en l'absence de nouvelles données de navigation.

De manière différente, la présente invention prévoit d'appliquer des variations sur ces deux indices de confiance, en fonction de la distance parcourue par le véhicule automobile à partir du moment où le panneau de limitation de vitesse qui a permis de déterminer l'indice de confiance IC2 a été identifié par le système de traitement d'images 102. De plus, ces variations vont dépendre du contexte de navigation déterminé à partir d'au moins un attribut délivré par le système de navigation et portant sur une donnée de contexte routier.

Dans la suite de l'exposé, et de façon non limitative, on considère que les différents contextes routiers considérés sont limités à l'ensemble {ville, autoroute, hors ville, autre}. Pour déterminer le contexte dans lequel le véhicule se trouve, le système de fusion 154 utilise ici deux attributs fournis généralement par le système de navigation 101, à savoir un premier attribut relatif au type de route (Autoroute, nationale, départementales, communales...), et un deuxième attribut relatif à la situation de conduite (ville, hors ville, intersection...).

Le procédé tel que décrit dans le document EP 2 017 807 est ici modifié en ce qu'il comporte une étape de détermination en temps réel de la distance parcourue par le véhicule automobile depuis l'identification d'un panneau de limitation de vitesse ayant permis l'établissement de ladite limitation de vitesse probable associée audit deuxième indice de confiance IC2, et une étape de détection de changement de contexte de navigation et en ce que, tant qu'aucun changement de contexte de navigation n'est détecté, on applique une première loi de variation sur le premier indice de confiance et une deuxième loi de variation sur le deuxième indice de confiance IC2 en fonction de la distance parcourue par le véhicule automobile.

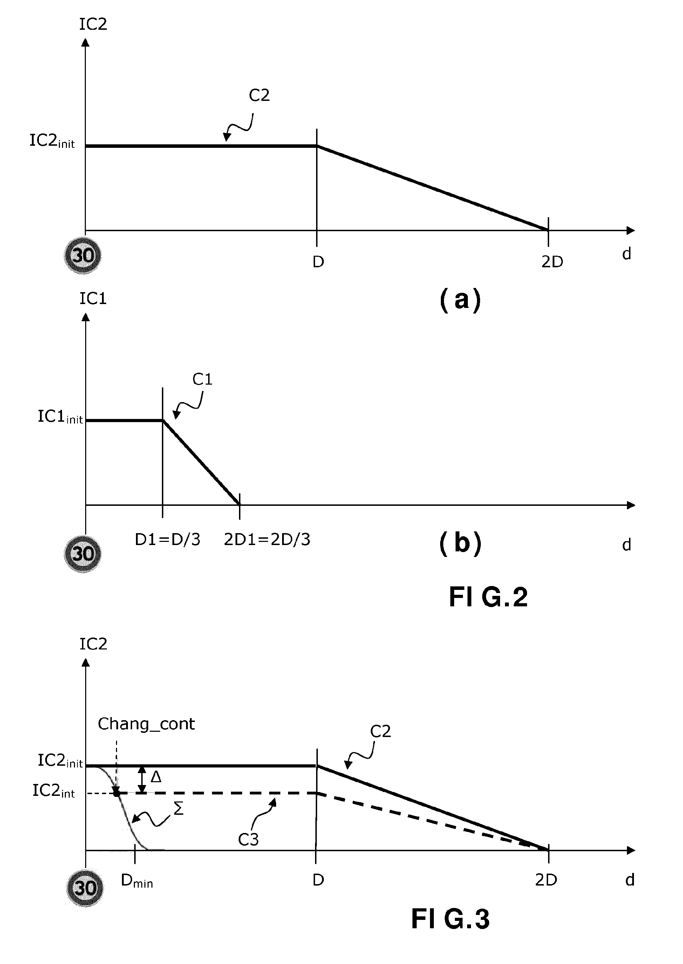

Un exemple de lois de variation telles qu'appliquées sur les deux indices de confiance est représenté sur la figure 2, la figure 2 (a) montrant plus précisément la loi de variation C2, qui va être appliquée sur l'indice de confiance IC2 en fonction de la distance d, et la figure 2 (b) montrant la loi de variation C2, qui va être appliquée sur l'indice de confiance IC1 en fonction de la distance d. Dans les deux cas, l'origine de l'axe des abscisses représentative de la distance parcourue d est fixée au moment où le système de traitement d'images 102 a identifié un panneau de limitation de vitesse, par exemple à 30 km/heure.

Comme représenté sur la figure 2 (a), la loi de variation C2 consiste à maintenir l'indice de confiance IC2 à sa valeur initiale, notée ici $IC2_{init}$ tant que le véhicule automobile n'a pas parcouru une certaine distance D, puis à faire décroître linéairement, en fonction de la distance parcourue, la valeur de l'indice de confiance IC2 jusqu'à une valeur nulle alors que le véhicule automobile parcourt une distance supplémentaire, de préférence de valeur égale à D. Ainsi, la valeur de l'indice de confiance IC2 s'annule ici lorsque le véhicule a parcouru, depuis l'identification du panneau, la distance 2D.

De façon similaire, et comme visible sur la figure 2 (b), la loi de variation C1 consiste à maintenir l'indice de confiance IC1 à sa valeur initiale, notée ici $IC1_{init}$ tant que le véhicule automobile n'a pas parcouru une certaine distance D1, puis à faire décroître linéairement, en fonction de la distance parcourue, la valeur de l'indice de confiance IC1 jusqu'à une valeur nulle alors que le véhicule automobile parcourt une distance supplémentaire, de préférence de valeur égale à D1. Ainsi, la valeur de l'indice de confiance IC1 s'annule ici lorsque le véhicule a parcouru, depuis l'identification du panneau de limitation, la distance 2D1.

Pour tenir compte du fait que les données du système de navigation 101 sont rafraichies beaucoup plus souvent que les données issues du système de traitement d'images 102, on prévoit avantageusement que la distance D1 à partir de laquelle une décroissance linéaire est appliquée à l'indice de confiance IC1 soit plus faible que la distance D à partir de laquelle une décroissance linéaire est appliquée à l'indice de confiance IC2. Les deux distances D et D1 sont de préférence fixées de manière à respecter l'équation :

$$D1 = D/3$$

Par ailleurs, la distance D, la distance D1 et les distances supplémentaires associées ont de préférence chacune une valeur fixée en fonction du contexte routier. En effet, on part notamment de l'hypothèse que ces distances doivent être plus faibles en ville que sur autoroute. Le tableau ci-dessous donne un exemple de valeurs qui peuvent être choisies pour D et D1, en fonction des quatre contextes routiers :

| Contexte Routier | **D1** = **D/3** (m) | **D** (m) |
|---|---|---|
| Autoroute | 1000 | 3000 |
| Ville | 175 | 375 |

(suite)

| Contexte Routier | **D1** = **D/3** (m) | **D** (m) |
|---|---|---|
| Sortie d'autoroute | 175 | 375 |
| Autre | 175 | 375 |

On comprend aisément que grâce à l'invention, le système dans sa globalité pourra, au bout d'un certain temps, redonner plus d'importance au système de navigation qu'au système de traitement d'image, même s'il n'y a pas de détection d'un nouveau panneau. Ceci permet donc de gérer notamment les situations de sortie de zone de travaux.

Comme indiqué précédemment, les lois de variations C1 et C2 décrites ci-dessus sont appliquées tant que le contexte de navigation n'a pas changé.

Si en revanche un changement de contexte de navigation est détecté, par exemple un passage d'un contexte « hors ville » à un contexte « en ville », le procédé peut prévoir, dans un premier mode de réalisation possible, d'interrompre l'application de la loi de variation C2 sur l'indice de confiance IC2, et de remettre à zéro la valeur de l'indice de confiance IC2. Cela revient à ne plus considérer le panneau de limitation de vitesse associé. Seule la limitation de vitesse issue du système de navigation 101 est alors considérée par le système de fusion 154.

Dans une mise en oeuvre préférée cependant, on prend en compte le fait que le système de navigation est imprécis, l'imprécision étant de l'ordre de la centaine de mètres. Ainsi, pour éviter une remise à zéro de l'indice de confiance IC2 sur détection d'un changement de contexte de navigation alors même que le système de traitement d'image vient juste de détecter la présence du panneau de limitation, dans notre exemple le panneau 30 km/heure, le procédé selon l'invention prévoit de ne remettre à zéro l'indice de confiance IC2 que si le véhicule a déjà parcouru une distance minimale prédéfinie $D_{min}$ lorsque le changement de contexte de navigation est détecté. La distance minimale $D_{min}$ dépend de la précision du système de navigation, et peut par exemple être de l'ordre de la centaine de mètres.

Si en revanche le changement de contexte de navigation est détecté avant que le véhicule automobile ait parcouru la distance minimale prédéfinie $D_{min}$, l'application de la deuxième loi de variation C2 sur le deuxième indice de confiance est également interrompue, mais on décide d'appliquer alors une troisième loi de variation C3 sur l'indice de confiance IC2 en fonction de la distance parcourue par le véhicule automobile. La figure 3 illustre un exemple de loi de variation C3 dans une telle situation. Dans cet exemple, la loi C3 consiste à maintenir, à partir de la détection de changement de contexte de navigation, l'indice de confiance IC2 à une valeur intermédiaire $IC2_{int}$ inférieure à la valeur initiale $IC2_{init}$ tant que le véhicule automobile n'a pas parcouru la distance D, puis à faire décroître linéairement, en fonction de la distance parcourue, la valeur de l'indice de confiance IC2 jusqu'à une valeur nulle alors que le véhicule automobile parcourt la distance supplémentaire. La valeur intermédiaire $IC2_{int}$ correspond de préférence à la valeur qu'aurait prise l'indice de confiance IC2 au moment de la détection de changement de contexte de navigation, si on lui avait fait subir une décroissance, depuis sa valeur initiale $IC2_{init}$, dépendant de la distance parcourue selon une fonction sigmoïde $\Sigma$. L'allure de la fonction sigmoïde $\Sigma$ est illustrée sur la figure 3, et la décroissance $\Delta$ appliquée est telle que :

$$\Delta = IC2_{init} - IC2_{int}$$

**Revendications**

1. Procédé de détermination automatique d'une limitation de vitesse en vigueur sur une route empruntée, ou sur le point d'être empruntée, par un véhicule automobile, comportant les différentes étapes suivantes :

- établir, au moyen d'un premier système (101), dit système de navigation faisant intervenir notamment un récepteur de données d'un système de positionnement géographique et des données de cartographie (111), une limitation de vitesse vraisemblable associée à un premier indice de confiance (IC1) ;
- constituer un premier ensemble d'informations (151) comprenant au moins la limitation de vitesse vraisemblable, et le premier indice de confiance;
- établir, au moyen d'un deuxième système (102), dit système de traitement d'images, faisant intervenir notamment une caméra (121) et des applications de traitement d'images (122) aptes à identifier et interpréter des panneaux de limitation de vitesse disposés au voisinage de la route, une limitation de vitesse probable associée à un deuxième indice de confiance (IC2) ;
- constituer un deuxième ensemble d'informations (152) comprenant au moins la limitation de vitesse probable, et le deuxième indice de confiance (IC2) ; et
- déterminer la limitation de vitesse en vigueur (153) sur la route considérée, à partir du premier ensemble d'informations et du deuxième ensemble d'informations et en prenant en considération le premier indice de confiance (IC1) et le deuxième indice de confiance (IC2) ;

le procédé étant **caractérisé en ce qu'**il comporte en outre une étape de détermination en temps réel de la distance parcourue par le véhicule automobile depuis l'identification d'un panneau de limitation de vitesse ayant permis l'établissement de ladite limitation de vitesse probable associée audit deuxième indice de confiance (IC2), et une étape de détection de changement de contexte de navigation à partir d'au moins un attribut délivré par le premier système (101) et portant sur une donnée de contexte routier, et **en ce que**, tant qu'aucun changement de contexte de navigation n'est détecté, on applique une première loi de variation (C1) sur le premier indice de confiance (IC1) et une deuxième loi de variation (C2) sur le deuxième indice de confiance (IC2) en fonction de la distance parcourue par le véhicule automobile.

2. Procédé selon la revendication 1, **caractérisé en ce que** la première loi de variation (C1) consiste à maintenir le premier indice de confiance (IC1) à une valeur initiale ($IC1_{init}$) tant que le véhicule automobile n'a pas parcouru une première distance (D1), puis à faire décroître linéairement, en fonction de la distance parcourue, la valeur du premier indice de confiance (IC1) jusqu'à une valeur nulle alors que le véhicule automobile parcourt une première distance supplémentaire.

3. Procédé selon l'une quelconque des revendications 1 ou 2, **caractérisé en ce que** la deuxième loi de variation (C2) consiste à maintenir le deuxième indice de confiance (IC2) à une valeur initiale ($IC2_{init}$) tant que le véhicule automobile n'a pas parcouru une deuxième distance (D), puis à faire décroître linéairement, en fonction de la distance parcourue, la valeur du deuxième indice de confiance (IC2) jusqu'à une valeur nulle alors que le véhicule automobile parcourt une deuxième distance supplémentaire.

4. Procédé selon les revendications 2 et 3, **caractérisé en ce que** la première distance (D1), la deuxième distance (D), la première distance supplémentaire et la deuxième distance supplémentaire ont chacune une valeur fixée en fonction du contexte routier.

5. Procédé selon la revendication 4, **caractérisé en ce que** la valeur de la première distance (D1) est le tiers de la valeur de la deuxième distance (D).

6. Procédé selon l'une quelconque des revendications 4 ou 5, **caractérisé en ce que** la valeur de la première distance supplémentaire est égale à la valeur de la première distance (D1).

7. Procédé selon l'une quelconque des revendications 4 à 6, **caractérisé en ce que** la valeur de la deuxième distance supplémentaire est égale à la valeur de la deuxième distance (D).

8. Procédé selon l'une quelconque des revendications 3 à 7, **caractérisé en ce que**, sur détection d'un changement de contexte de navigation intervenant alors que le véhicule automobile a déjà parcouru, depuis l'identification du panneau de limitation de vitesse ayant permis l'établissement de ladite limitation de vitesse probable associée audit deuxième indice de confiance (IC2), une distance minimale ($D_{min}$) prédéfinie inférieure à ladite deuxième distance, l'application de la deuxième loi de variation (C2) sur le deuxième indice de confiance est interrompue, et la valeur du deuxième indice de confiance (IC2) est remise à zéro.

9. Procédé selon la revendication 8, **caractérisé en ce que**, sur détection d'un changement de contexte de navigation intervenant avant que le véhicule automobile ait parcouru ladite distance minimale prédéfinie ($D_{min}$), l'application de la deuxième loi de variation (C2) sur le deuxième indice de confiance est interrompue, et on applique une troisième loi de variation (C3) sur le deuxième indice de confiance (IC2) en fonction de la distance parcourue par le véhicule automobile.

10. Procédé selon la revendication 9, **caractérisé en ce que** la troisième loi de variation consiste à maintenir le deuxième indice de confiance (IC2) à une valeur intermédiaire ($IC2_{int}$) inférieure à la valeur initiale ($IC2_{init}$) du deuxième indice de confiance (IC2) tant que le véhicule automobile n'a pas parcouru ladite deuxième distance, puis à faire décroître linéairement, en fonction de la distance parcourue, la valeur du deuxième indice de confiance (IC2) jusqu'à une valeur nulle alors que le véhicule automobile parcourt la deuxième distance supplémentaire.

11. Procédé selon la revendication 10, **caractérisé en ce que** ladite valeur intermédiaire ($IC2_{int}$) est déterminée en appliquant à la valeur initiale ($IC2_{init}$) une décroissance dépendant de la distance parcourue selon une fonction sigmoïde ($\Sigma$).

12. Procédé selon l'une quelconque des revendications précédentes, **caractérisé en ce que** ledit au moins attribut portant sur une donnée de contexte routier permet de distinguer les contextes routiers dans l'ensemble {ville, autoroute, hors ville, autre}.

13. Système de détermination automatique d'une limitation de vitesse en vigueur sur une route empruntée, ou sur le point d'être empruntée, par un véhicule automobile, comportant :

   - un premier système (101), dit système de navigation, faisant intervenir notamment système de positionnement géographique (112) et des données de cartographie (111) pour établir une limitation de vitesse vraisemblable associée à un premier indice de confiance (IC1) et pour constituer un premier ensemble d'informations (151) comprenant au moins la limitation de vitesse vraisemblable et le premier indice de confiance;

   - un deuxième système (102), dit système de traitement d'images, faisant intervenir notamment une caméra (121) et des applications de traitement d'images (122), aptes à identifier et interpréter des panneaux de limitation de vitesse disposés au voisinage de la route, pour établir une limitation de vitesse probable associée à un deuxième indice de confiance (IC2) et pour constituer un deuxième ensemble d'informations (152) comprenant au moins la limitation de vitesse probable et le deuxième indice de confiance ;

   - des moyens (154) de traitement d'informations pour déterminer, à partir du premier ensemble d'informations et du deuxième ensemble d'informations, la limitation de vitesse en vigueur sur la route considérée, **caractérisé en ce que** les moyens de traitement d'informations sont aptes à déterminer en temps réel la distance parcourue par le véhicule automobile depuis l'identification d'un panneau de limitation de vitesse ayant permis l'établissement de ladite limitation de vitesse probable associée audit deuxième indice de confiance (IC2), à détecter un changement de contexte de navigation à partir d'au moins un attribut délivré par le premier système (101) et portant sur une donnée de contexte routier,

   et, tant qu'aucun changement de contexte de navigation n'est détecté, à appliquer une première loi de variation sur le premier indice de confiance (IC1) et une deuxième loi de variation sur le deuxième indice de confiance (IC2) en fonction de la distance parcourue par le véhicule automobile.

FIG.1 – art antérieur

FIG.2

FIG.3

Europäisches
Patentamt

European
Patent Office

Office européen
des brevets

## RAPPORT DE RECHERCHE EUROPEENNE

Numéro de la demande

EP 15 19 4397

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A,D | FR 2 919 098 A1 (VALEO VISION SA [FR]) 23 janvier 2009 (2009-01-23) * le document en entier * ----- | 1-13 | INV. G08G1/0962 G06K9/00 G07C5/00 |
| A | FR 2 968 817 A1 (BOSCH GMBH ROBERT [DE]) 15 juin 2012 (2012-06-15) * le document en entier * ----- | 1-13 | |
| A | US 2007/050130 A1 (GRIMM DONALD K [US] ET AL) 1 mars 2007 (2007-03-01) * le document en entier * ----- | 1-13 | |
| A | DE 10 2012 213485 A1 (BOSCH GMBH ROBERT [DE]) 6 février 2014 (2014-02-06) * le document en entier * ----- | 1-13 | |

DOMAINES TECHNIQUES
RECHERCHES (IPC)

G08G
G06K
G07C

Le présent rapport a été établi pour toutes les revendications

| Lieu de la recherche | Date d'achèvement de la recherche | Examinateur |
|---|---|---|
| La Haye | 3 mars 2016 | Berland, Joachim |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
......................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 15 19 4397

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

03-03-2016

| Document brevet cité au rapport de recherche | Date de publication | Membre(s) de la famille de brevet(s) | Date de publication |
|---|---|---|---|
| FR 2919098 A1 | 23-01-2009 | AT 475959 T<br>EP 2017807 A1<br>FR 2919098 A1<br>JP 5405775 B2<br>JP 2009037613 A<br>US 2009041304 A1 | 15-08-2010<br>21-01-2009<br>23-01-2009<br>05-02-2014<br>19-02-2009<br>12-02-2009 |
| FR 2968817 A1 | 15-06-2012 | AUCUN | |
| US 2007050130 A1 | 01-03-2007 | CN 101297178 A<br>DE 112006002286 T5<br>US 2007050130 A1<br>WO 2007024365 A2 | 29-10-2008<br>26-06-2008<br>01-03-2007<br>01-03-2007 |
| DE 102012213485 A1 | 06-02-2014 | AUCUN | |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2017807 B1

- EP 2017807 A